# EUROPEAN PATENT APPLICATION

(11) **EP 4 492 553 A1**
(43) Date of publication of application: **15.01.2025**
(21) Application number: 23766367.9
(22) Date of filing: 02.02.2023
(51) Int. Cl.: H01M 50/289, H01M 50/107, H01M 50/152, H01M 50/167, H01M 50/184, H01M 50/204, H01M 50/213, H01M 50/222, H01M 50/227, H01M 50/233, H01M 50/545, H01M 50/559

(54) **BATTERY PACK**

(30) Priority: 10.03.2022 JP 2022037541
(71) Applicant: Panasonic Energy Co., Ltd., Osaka 570-8511 (JP); Panasonic Holdings Corporation, Osaka, 571-8501 (JP)
(72) Inventor: FUKUDA, Shinsuke, Kadoma-shi, Osaka 571-0057 (JP); SAKAGAWA, Yasuaki, Kadoma-shi, Osaka 571-0057 (JP)
(74) Representative: Novagraaf International SA
(86) International application number: PCT/JP2023/003309
(87) International publication number: WO 2023/171187

(57) **Abstract**

A battery pack includes: a plurality of battery cells, each including an outer covering can and a sealing plate and being formed by securing an outer peripheral edge of the sealing plate to an opening of the outer covering can by a crimped part via an insulating gasket; an outer covering case containing the battery cells; and a protective ring member for the insulating gasket of one of the battery cells. The protective ring member includes an end face plate part covering a surface of the crimped part and a ribbed ring part covering an inner peripheral end edge of the crimped part, and the ribbed ring part is disposed between the end face plate part and the sealing plate, and includes a tip end surface close to a surface of the sealing plate.

## Description

### TECHNICAL FIELD

The present invention relates to battery packs in which a plurality of battery cells are disposed in an outer covering case.

### BACKGROUND ART

Secondary batteries, such as lithium-ion batteries, which have high electromotive force and high energy density, generate gas inside battery cells and increases the internal pressure due to overcharge, overdischarge, internal short circuit, or external short circuit, so they are provided with a relief valve to prevent its outer covering can from rapturing. The gas ejected from the opened relief valve has a high temperature, so it may heat up adjacent battery cells and cause them to catch fire.

A battery pack has been proposed that has a structure of preventing the adverse effects of the high-temperature ejected substance exhausted from a heated battery cell that causes adjacent battery cells to catch fire (for example, see PTL 1).

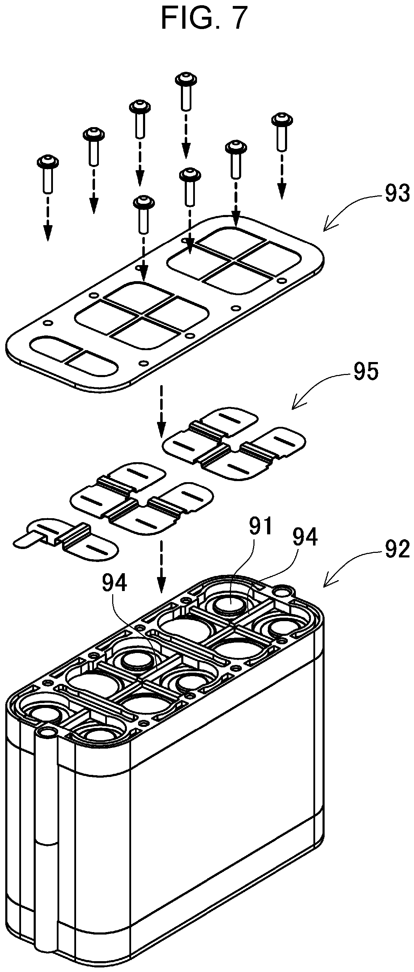

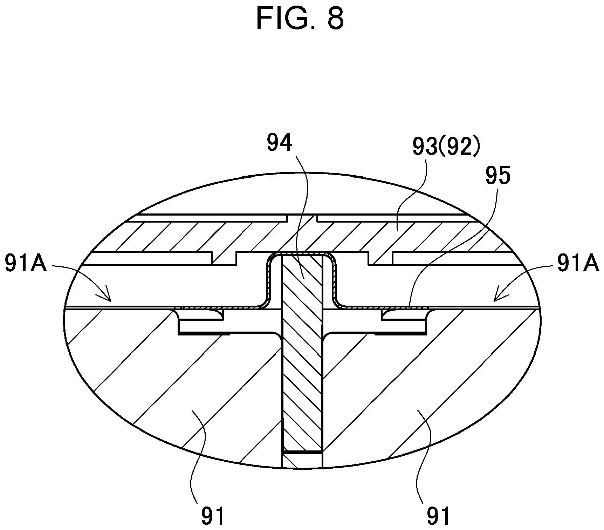

The battery pack disclosed in the publication is provided with, as illustrated in the exploded perspective view of Fig. 7 and the enlarged cross-sectional view of Fig. 8, gap closing wall 94 disposed around each electrode end face 91A of battery cells 91 in which the relief valve is provided. Gap closing wall 94 protrudes so as to abut against end face covering portion 93 of battery holder 92, which is provided around battery cells 91 and disposed opposite electrode end faces 91A of battery cells 91. End face covering portion 93 and gap closing wall 94 together form a closed structure for the space in which electrode end face 91A is exposed, to prevent the ejected substance from battery cell 91 from flowing out to an end face of adj acent battery cell 91.

### CITATION LIST

### Patent Literature

PTL 1: Japanese Patent Unexamined Publication No. 2020-166991

### SUMMARY

The battery pack shown in Figs. 7 and 8 allows gap closing wall 94 and end face covering portion 93 of battery holder 92 to clamp lead plate 95, so it is difficult to achieve a hermeticity sealed structure across lead plate 95. Therefore, it is difficult to reliably prevent the ejected substance from leaking from the gap between the lead plate 95 and causing adjacent battery cells 91 to catch fire. Further, it is extremely difficult for the battery pack in which a plurality of battery cells 91 are encased in an outer covering case to confine the high temperature, high pressure ejected substance, which is ejected from a battery cell in which the internal pressure is increased, within the case. The reason is that the ejected substance is gushed out from the battery cell at a high temperature exceeding 500°C. For this reason, conventional common battery packs employ a structure such as to exhaust the high temperature, high pressure ejected substance, which is exhausted from a battery cell, to outside while reducing the energy, to prevent fire from spreading to another battery cell. This structure allows the ejected substance exhausted from each of the battery cells to be guided into the space that exists as a gap space inside the battery pack and to be exhausted outside. Therefore, the battery cells are allowed to communicate with each other at the exhaust side of the relief valve through the space inside the battery pack, so that the ejected substance exhausted from a certain battery cell can flows out to the relief valve side of another battery cell, causing fire to spread to the battery cell.

In each of the battery cells encased in the outer covering case, the opening of the outer covering can is closed by a sealing plate. In order to electrically insulate the outer covering can and the sealing plate from each other, an insulating member, called an insulating gasket, is interposed between the sealing plate and the crimped part of the outer covering can, to hermetically seal the outer covering can and the sealing plate. The insulating gasket may soften and melt when exposed to the high temperature, high pressure ejected substance exhausted from the relief valve, causing a short-circuit between the outer covering can and the sealing plate. The short-circuit between the outer covering can and the sealing plate causes the battery cell to pass excessive short-circuit current and to generate abnormal heat, which may be a cause of spread of fire. Particularly in an environment exposed to high temperature, high pressure ejected substance in which spread of fire easily occurs, the abnormal heat generation of the battery cell itself due to the excessive short-circuit current may be an inhibitory factor to ensure safety.

The present invention has been developed to solve the foregoing and other problems. An object of the present invention is to provide a battery pack that prevents the adverse effects due to the heat of the insulating gasket resulting from high temperature, high pressure ejected substance, and effectively prevents fire from spreading to battery cells, to be able to achieve high safety.

According to an embodiment of the present invention, a battery pack includes: a plurality of battery cells, each including an outer covering can and a sealing plate and being formed by securing an outer peripheral edge of the sealing plate to an opening of the outer covering can by a crimped part via an insulating gasket; an outer covering case containing the battery cells; and a protective ring member for the insulating gasket of one of the battery cells. The protective ring member includes an end face plate part covering a surface of the crimped part and a ribbed ring part covering an inner peripheral end edge of the crimped part, and the ribbed ring part is disposed between the end face plate part and the sealing plate, and includes a tip end surface close to a surface of the sealing plate.

The battery pack as described above is able to achieve high safety by preventing the adverse effects due to the heat of the insulating gasket resulting from high temperature, high pressure ejected substance, and effectively preventing fire from spreading to battery cells.

### BRIEF DESCRIPTION OF THE DRAWINGS

Fig. 1 is a schematic cross-sectional view of a battery pack according to an exemplary embodiment of the present invention.
Fig. 2 is an schematic exploded perspective view of a battery assembly of the battery pack shown in Fig. 1.
Fig. 3 is a bottom perspective view of an insulating cover of a battery holder shown in Fig. 2.
Fig. 4 is a schematic cross-sectional view of a battery pack according to another exemplary embodiment of the present invention.
Fig. 5 is a schematic cross-sectional view of a battery pack according to still another exemplary embodiment of the present invention.
Fig. 6 is a schematic enlarged cross-sectional view of a battery pack according to yet another exemplary embodiment of the present invention.
Fig. 7 is an exploded perspective view of a conventional battery pack.
Fig. 8 is an enlarged cross-sectional view of the battery pack shown in Fig. 7.

### DESCRIPTION OF EMBODIMENTS

In one embodiment of the present invention, a battery pack includes: a plurality of battery cells, each including an outer covering can and a sealing plate and being formed by securing an outer peripheral edge of the sealing plate to an opening of the outer covering can by a crimped part via an insulating gasket; an outer covering case containing the battery cells; and a protective ring member for the insulating gasket of each of the battery cells, wherein: the protective ring member includes an end face plate part covering a surface of the crimped part and a ribbed ring part covering an inner peripheral end edge of the crimped part; and the ribbed ring part is disposed between the end face plate part and the sealing plate such as to bring a tip end surface thereof close to a surface of the sealing plate.

The battery pack as described above has the feature of preventing the adverse effects caused by softening or melting of the insulating gasket of any of the battery cells due to the high temperature, high pressure ejected substance that is ejected when the battery cell has undergone thermal runaway, thereby preventing the thermal runaway of the battery cells from being induced, to ensure safety. A battery cell that has undergone thermal runaway exhausts high temperature, high pressure ejected substance. When the ejected substance makes contact with the insulating gasket, which hermetically seals the outer covering can and the sealing plate air tight in an electrically insulated condition, the insulate undergoes thermal damages and is consequently unable to keep the outer covering can and the sealing plate in an electrically insulated condition. The battery cell in this condition causes an excessive short-circuit current to flow between the outer covering can and the sealing plate, generating heat due to Joule heat, which may be a cause of inducing thermal runaway. The battery pack as described above includes: a protective ring member for the insulating gasket of each battery cell; and the protective ring member includes an end face plate part covering a surface of the crimped part and a ribbed ring part covering an inner peripheral end edge of the crimped part; and the ribbed ring part is disposed between the end face plate part and the sealing plate such as to bring a tip end surface thereof close to a surface of the sealing plate. The ribbed ring part covers an exposed part of the insulating gasket to prevent a high temperature ejected substance from making contact with the insulating gasket. The insulating gasket that does not make contact with the high temperature ejected substance retains the outer covering can and the sealing plate in an electrically insulated condition without being affected by the damages caused by the heat of the ejected substance. Therefore, the battery pack as described above prevents the high temperature ejected substance exhausted from a battery cell that has undergone a thermal runaway from causing thermal damages to the insulating gasket of another battery cell disposed in the outer covering case. This prevents the adverse effect of thermal runaway in a battery cell that induces thermal runaway in another battery cell.

In a battery pack according to another embodiment of the present invention, the sealing plate may include a protruding electrode at a center of the sealing plate, and a ring-shaped flat surface, disposed outside the protruding electrode, on which the crimped part is stacked via the insulating gasket; a ring-shaped recess may be formed between the protruding electrode and the crimped part; and the ribbed ring part may protrude toward the ring-shaped recess to bring the tip end surface into contact with the ring-shaped flat surface.

A battery pack according to another embodiment of the present invention may further include a battery holder arranging the battery cells at a fixed position, and the end face plate part may be integrally molded with the battery holder.

In a battery pack according to another embodiment of the present invention, the end face plate part and the ribbed ring part may be molded into an integral structure.

In a battery pack according to another embodiment of the present invention, the ribbed ring part may be a member separate from the end face plate part.

In a battery pack according to another embodiment of the present invention, the end face plate part and the ribbed ring part may be connected together in a fixed position by an engaging structure.

In a battery pack according to another embodiment of the present invention, the end face plate part and the ribbed ring part may be joined together.

In a battery pack according to another embodiment of the present invention, the ribbed ring part may be molded of a heat resistant material with a higher heat resistance temperature than the end face plate part.

In a battery pack according to another embodiment of the present invention, the ribbed ring part may be molded of a plastic with a higher heat resistance temperature than the end face plate part.

In a battery pack according to another embodiment of the present invention, the ribbed ring part may be made of an inorganic material.

Hereinbelow, exemplary embodiments of the present invention are described with reference to the drawings. It should be noted, however, that the following exemplary embodiments are merely examples for embodying the technical ideas of the present invention, and the present invention is not limited to the following exemplary embodiments. In addition, the present description is in no way provided for limiting the members shown in the claims to the members illustrated in the exemplary embodiments. Moreover, the dimensions, materials, shapes, relative arrangements, and the like of parts and elements described in the following exemplary embodiments are merely illustrative examples, and should not be construed to limit the scope of the invention, unless specifically stated otherwise. Furthermore, the sizes of some elements, their positional relationships, and so forth shown in the drawings may be exaggerated for clarity in illustration. In the following description, like names and symbols refer to same or similar elements, and detailed description thereof will not be given as appropriate. Furthermore, each of the elements that constitute the present invention may be embodied by an embodiment in which one member serves as a plurality of elements so that the plurality of elements are composed of the same member, or conversely, may be achieved in such an embodiment in which the function of one member is shared among a plurality of members.

The battery pack of the present invention is mainly used as a power supply for motive power. This battery pack may be used, for example, a power supply for electrically-powered apparatuses that are driven by an electric motor, such as electric cleaners, electric power tools, electric power assisted bicycles, electric motorbikes, electric wheelchairs, electric tricycles, and electric carts. However, the present invention does not specifically limit the applications of the battery pack, but the battery pack may also be used as a power supply for electrical appliances other than the electrically-powered apparatuses, such as various electrical appliances used indoors or outdoors, for example, radio transceivers, lighting devices, and so forth, and as a motive power source and an auxiliary power source for transportation means.

### First Exemplary Embodiment

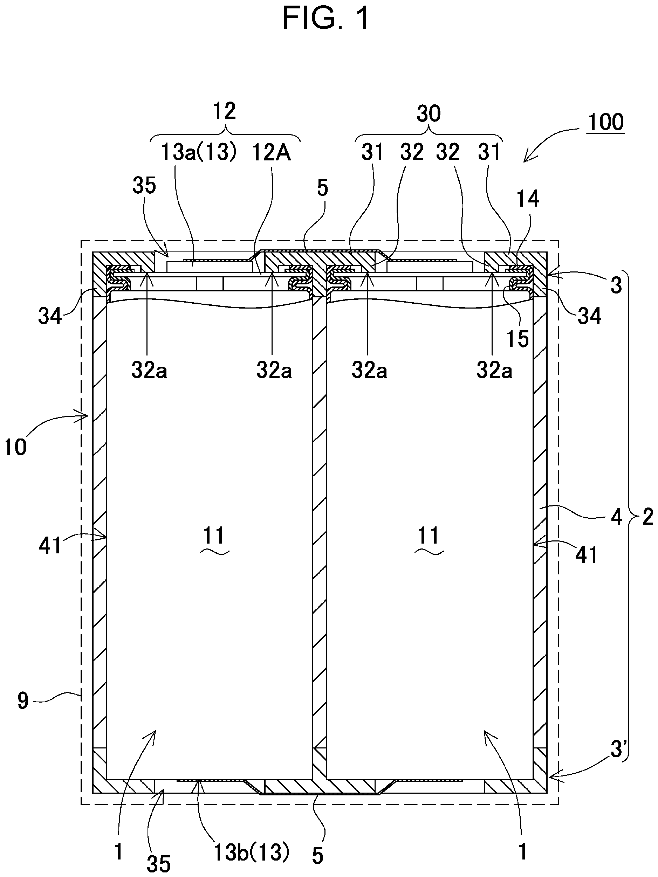

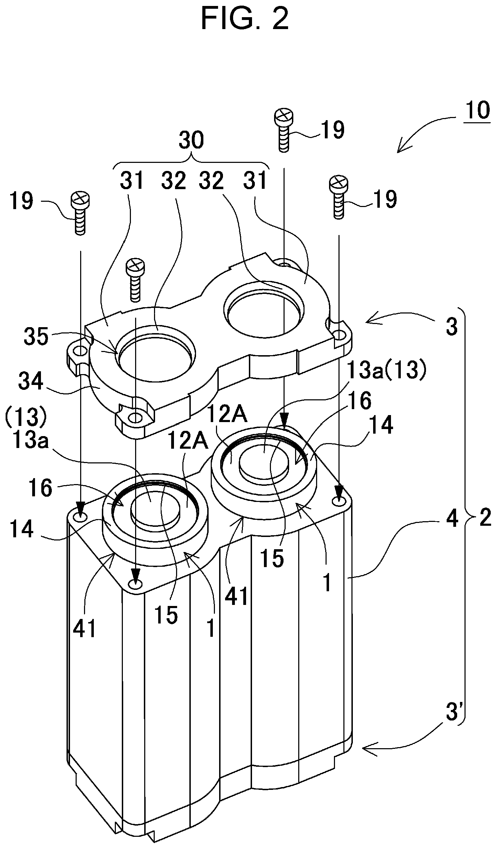

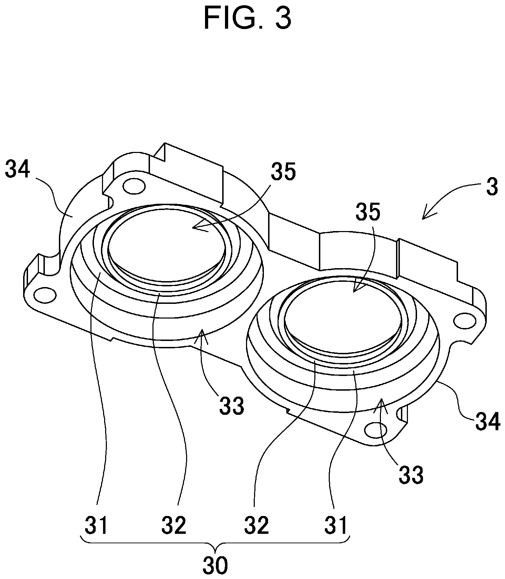

A battery pack according to the first exemplary embodiment of the present invention is shown in Figs. 1 to 3. In these drawings, Fig. 1 shows a schematic cross-sectional view of the battery pack according to the first exemplary embodiment, Fig. 2 shows a schematic exploded perspective view of a battery assembly of the battery pack shown in Fig. 1, and Fig. 3 shows a bottom perspective view of an insulating cover of a battery holder of the battery assembly shown in Fig. 2. These drawings illustrate battery pack 100 in which two battery cells 1 are encased in outer covering case 9. However, the present invention does not particularly specify the number of battery cells 1 to be encased in outer covering case 9, and the number of battery cells 1 may be set to an optimum number in order to obtain a capacity that is suitable for the use. In battery pack 100 in which a large number of battery cells 1 are encased in outer covering case 9, battery cells 1 may be connected in series or in parallel by connecting later-described lead plate 5 to electrodes 13 provided at respective ends of adj acent battery cells 1 the opposite ends of which are disposed on the same plane.

Battery pack 100 described above includes outer covering case 9, a plurality of battery cells 1 encased in outer covering case 9, battery holder 2 arranging each of battery cells 1 at a fixed position, and lead plate 5 connected to ends of battery cells 1. Battery cell 1 is provided with positive and negative electrodes 13 at respective end faces. Battery holder 2 includes main body holder 4 and insulating covers 3 and 3' connected to the top and bottom of main body holder 4. Battery holder 2 retains a plurality of battery cells 1 in such an orientation parallel to each other along a longitudinal direction, and in such an orientation in which electrodes 13 provided at respective ends of battery cells 1 are arranged on the same plane. Insulating covers 3 and 3' are connected to the top and bottom of main body holder 4 to cover the end faces of battery cells 1 and arrange lead plate 5 at a fixed position. Lead plate 5 connects electrodes 13 of adjacent battery cells 1.

### Outer Covering Case 9

Outer covering case 9 encases a plurality of battery cells 1 therein as battery assembly 10 arranged at a fixed position by battery holder 2. Outer covering case 9 is formed by molding a thermoplastic into a hollow box shape. Outer covering case 9 is provided with a relief opening (not shown) for exhausting the ejected substance from the relief valves of battery cells 1. Because outer covering case 9 is a closed structure and contains battery assembly 10 inside, the ejected substance flows into the gap space inside outer covering case 9 and causes thermal damages to insulating gaskets 15 of battery cells 1. Insulating gasket 15 is disposed between crimped part 14 of outer covering can 11 and sealing plate 12 in order to electrically insulate outer covering can 11 and sealing plate 12, which serve as the positive and negative electrodes.

### Battery Cell 1

For battery cell 1, a non-aqueous electrolyte secondary battery, such as a lithium-ion battery that shows high energy efficiency, is suitable. However, battery cell 1 is not limited to a lithium-ion battery but may be any type of secondary battery in which the opening of outer covering can 11 is crimped to secure sealing plate 12 via insulating gasket 15 and a relief valve is used to exhaust the ejected substance when the internal pressure increases. Battery cell 1 is produced by encasing an electrode assembly into outer covering can 11 made of a metal, filling an electrolyte solution therein, and air-tightly closing the opening of outer covering can 11 with sealing plate 12. Battery cell 1 is provided with positive and negative electrodes 13 at opposite ends. Battery cell 1 uses electrodes provided on opposite end faces, i.e., a bottom face of outer covering can 11 and an electrode provided at a central part of sealing plate 12, as positive and negative electrodes 13. In each of battery cells 1 shown in Fig. 1, protruding electrode 13a provided on sealing plate 12 and bottom face electrode 13b of outer covering can 11 are provided at opposite ends as positive and negative electrodes 13.

Outer covering can 11 is processed into a tubular shape with its bottom closed by press working a metal plate. Sealing plate 12 is produced by press working a metal plate into a shape provided with protruding electrode 13a at its central part. Sealing plate 12 is provided with a relief valve (not shown) inside. Furthermore, sealing plate 12 is provided with a relief opening (not shown) around protruding electrode 13a so that the ejected substance exhausted from the relief valve that is opened can be exhausted outside. In order to prevent the rapture due to an internal pressure increase, the relief valve is allowed to open to exhaust the ejected substance when the internal pressure exceeds a threshold value. The relief valve that is opened exhausts the high temperature ejected substance.

For battery cell 1, a cylindrical battery is suitable. The reason is that, by crimping the entire circumference of the opening of outer covering can 11 and insulating with insulating gasket 15, the cylindrical battery can be hermetically sealed air-tightly by sealing plate 12. Because there is a potential difference between outer covering can 11 and sealing plate 12, which are made of a metal plate, insulating gasket 15 is fitted between crimped part 14 of outer covering can 11 and sealing plate 12 to electrically insulate them. Because outer covering can 11 is hermetically sealed by sealing plate 12 by crimping the opening, insulating gasket 15 is brought into an interposed condition between crimped part 14 and sealing plate 12. Outer covering can 11 with its opening edge being bent inward by the crimping process allows crimped part 14 to press insulating gasket 15 against the surface of sealing plate 12, whereby outer covering can 11 and sealing plate 12 are electrically insulated and hermetically sealed. Sealing plate 12 shown in Fig. 1 is formed by press working a metal plate so that protruding electrode 13a is provided at its central part and the outside of protruding electrode 13a is formed into ring-shaped flat surface 12A. The outer peripheral edge part of ring-shaped flat surface 12A sandwiches insulating gasket 15 between it and outer covering can 11, which is pressed by crimped part 14 to hermetically seal outer covering can 11.

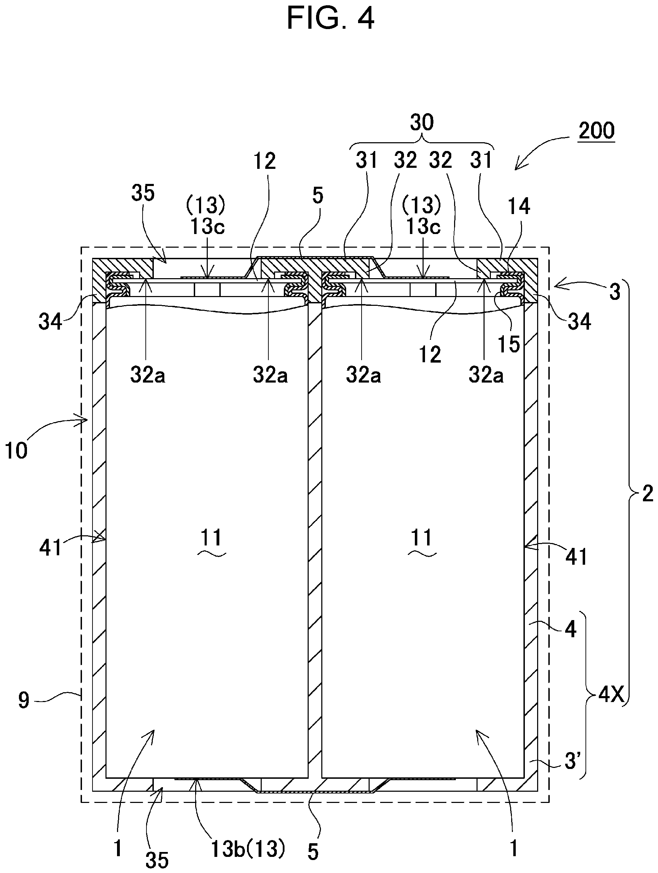

Battery cell 1 as described above uses electrode 13 of sealing plate 12 as protruding electrode 13a, but battery cell 1 does not necessarily use electrode 13 of sealing plate 12 as protruding electrode 13a. As in battery pack 200 shown in Fig. 4, it is possible that electrode 13 of sealing plate 12 of battery cell 1 may be flat surface electrode 13c. This battery cell 1 is likewise hermetically sealed by sandwiching insulating gasket 15 between the outer peripheral edge part of sealing plate 12 and outer covering can 11, and pressing it with crimped part 14.

Insulating gasket 15 electrically insulates outer covering can 11 and sealing plate 12 from each other and hermetically seals them air-tightly. Insulating gasket 15 undergoes elastic deformation by being pressed by crimped part 14 and makes in intimate contact with crimped part 14 and the surface of sealing plate 12, to hermetically seal outer covering can 11 and sealing plate 12. Insulating gasket 15 is required to have heat resistance, electrolyte resistance, and electrically insulative properties. For insulating gasket 15 that achieves such physical properties, super engineering plastics, such as PPS and PTFE, are used. However, even with such insulating gasket 15 with good heat resistance, it is extremely difficult to achieve physical properties that can withstand the temperature of the ejected substance exhausted from the relief valve. Insulating gasket 15 separates crimped part 14 and sealing plate 12 from each other so as not to come into contact, to insulate them from each other, so insulating gasket 15 is disposed in a gap provided between crimped part 14 and sealing plate 12, which means that it is impossible to completely eliminate the exposed part thereof. When this exposed part of insulating gasket 15 is exposed to a high temperature ejected substance, insulating gasket 15 undergoes thermal damages and is consequently unable to maintain crimped part 14 and sealing plate 12 to be in an insulated condition. An excessive short-circuit current can flow between outer covering can 11 and sealing plate 12 that are unable to be kept in an insulated condition by insulating gasket 15, which may deteriorate safety.

### Battery Holder 2

Battery holder 2 contains battery cells 1 inside and arranges them in a fixed position. Battery holder 2 shown in Figs. 1 and 2 includes main body holder 4 and insulating covers 3 and 3', which are separately molded of a thermoplastic, so that insulating covers 3 and 3' are connected to the top and bottom of main body holder 4, to arrange a plurality of battery cells 1 in a fixed position. Main body holder 4 arranges a plurality of battery cells 1 in a parallel posture to each other by inserting battery cells 1 in a plurality of cell-containing compartments 41, which are formed in a parallel posture. In battery holder 2, insulating covers 3 and 3' are secured to main body holder 4, so that electrodes 13 that are provided on opposite ends of battery cells 1 are arranged in the same planes.

Insulating covers 3 and 3' shown in Fig. 2 are secured to main body holder 4 with fastening screws 19 that penetrate corner parts. Fastening screws 19 penetrate the four corner parts of insulating cover 3 and are screwed into main body holder 4, to secure insulating covers 3 and 3' at fixed positions on main body holder 4. After battery cells 1 are inserted, main body holder 4 shown in Fig. 2 is joined to insulating covers 3 and 3' and arranges battery cells 1 in a fixed position. Main body holder 4 retains inserted battery cells 1 at its middle part and retains them in a fixed position. Insulating covers 3 and 3' electrically insulate the end faces of battery cells 1 inserted in main body holder 4 and arrange lead plate 5 at a fixed position. Insulating covers 3 and 3' are provided with connection windows 35, for connecting with lead plate 5, opened at the positions opposed to the end faces of battery cells 1.

Insulating cover 3 shown in the bottom perspective view of Fig. 3 is provided with engaging recesses 33 into which the end parts of battery cells 1 are inserted. Engaging recess 33 is a circular-shaped recess such that an end part of a cylindrical battery is engaged therein, which retains the outer circumferential surface of the end part of battery cell 1. Main body holder 4 is, as illustrated in Figs. 1 and 2, provided with cell-containing compartments 41 in which battery cells 1 are inserted. The openings of engaging recesses 33 are disposed at opposite positions to the openings of cell-containing compartments 41 of main body holder 4. In battery pack 100, which uses cylindrical batteries for battery cells 1, cell-containing compartments 41 of main body holder 4 and engaging recesses 33 are formed in a cylindrical shape. Battery holder 2 shown in Figs. 1 and 2 is such that battery cells 1 are inserted in cell-containing compartments 41 of main body holder 4 to be arranged in a parallel posture to each other, and respective opposite ends of battery cells 1 are guided into engaging recesses 33 of insulating covers 3 and 3' to be arranged in a fixed position. However, according to the present invention, battery holder 2 is not limited to this configuration. Battery holder 2 may have such a configuration that, as illustrated in Fig. 4, bottom insulating cover 3' is integrated with main body holder 4 and only the top opening of closed-bottomed main body holder 4X is covered by insulating cover 3.

Insulating cover 3 is provided with protective ring member 30 integrally molded therewith, in order to prevent damages to the insulating member of battery cells 1, which results from the ejected substance. Insulating cover 3 includes protective ring member 30 provided opposite the end faces of battery cells 1. Protective ring member 30 includes end face plate part 31, which covers the surface of crimped part 14 of battery cell 1, and ribbed ring part 32, which protrudes from end face plate part 31 toward the surface of sealing plate 12. Ribbed ring part 32 protrudes from end face plate part 31 toward sealing plate 12 and brings tip end surface 32a close to the surface of sealing plate 12. Tip end surface 32a of ribbed ring part 32 is brought close to the surface of sealing plate 12, preferably so as to be in contact with the surface of sealing plate 12. Protective ring member 30 allows end face plate part 31 and ribbed ring part 32 to extend from the surface of crimped part 14 to the surface of sealing plate 12, to protect insulating gasket 15.

Because insulating gasket 15 is exposed in the gap between crimped part 14 and sealing plate 12, the exposed part can be softened or melted when exposed to the ejected substance, which can be a cause of short-circuit between outer covering can 11 and sealing plate 12. However, protective ring member 30 allows ribbed ring part 32 and end face plate part 31 to cover the exposed part of insulating gasket 15 to prevent the adverse effects caused by damages to insulating gasket 15, which results from the ejected substance.

In battery cells 1 shown in Fig. 1, protruding electrode 13a is provided at a central part of sealing plate 12, ring-shaped flat surface 12A is provided on the outer peripheral part of protruding electrode 13a, and insulating gasket 15 and crimped part 14 are stacked on the outer peripheral part of ring-shaped flat surface 12A. Therefore, ring-shaped recess 16 is provided between protruding electrode 13a and crimped part 14. Ribbed ring part 32 protrudes toward ring-shaped recess 16 and brings protruding tip end surface 32a into contact with ring-shaped flat surface 12A.

In insulating cover 3 shown in Figs. 1 and 3, circumferential wall part 34, which has an inner shape such as to fit along the outer circumference of battery cell 1, and end face plate part 31 are formed in an integral structure, and engaging recess 33 for guiding battery cell 1 is provided inside circumferential wall part 34 and end face plate part 31. Moreover, the inner circumference of end face plate part 31 is provided with ribbed ring part 32 to be an integral structure. This insulating cover 3 is provided with engaging recess 33 for battery cell 1, and end face plate part 31 and ribbed ring part 32 are integrally molded with each other. Therefore, end face plate part 31 and ribbed ring part 32 are disposed at a fixed position relative to battery cell 1, so that relative misalignment between protective ring member 30 and battery cell 1 can be prevented. This results in the feature that protective ring member 30 is able to protect insulating gasket 15 effectively from the ejected substance. Insulating cover 3 described above allows battery cell 1 to be inserted in engaging recess 33 to arrange battery cell 1 in a fixed position. However, insulating cover 3 may prevent relative misalignment with battery cell 1 by being disposed at a fixed position on main body holder 4 using fastening screws or an engaging structure, not shown, without providing engaging recess 33 in which battery cell 1 is inserted. Accordingly, it is also possible to secure insulating cover 3 at a fixed position on main body holder 4 without providing engaging recess 33.

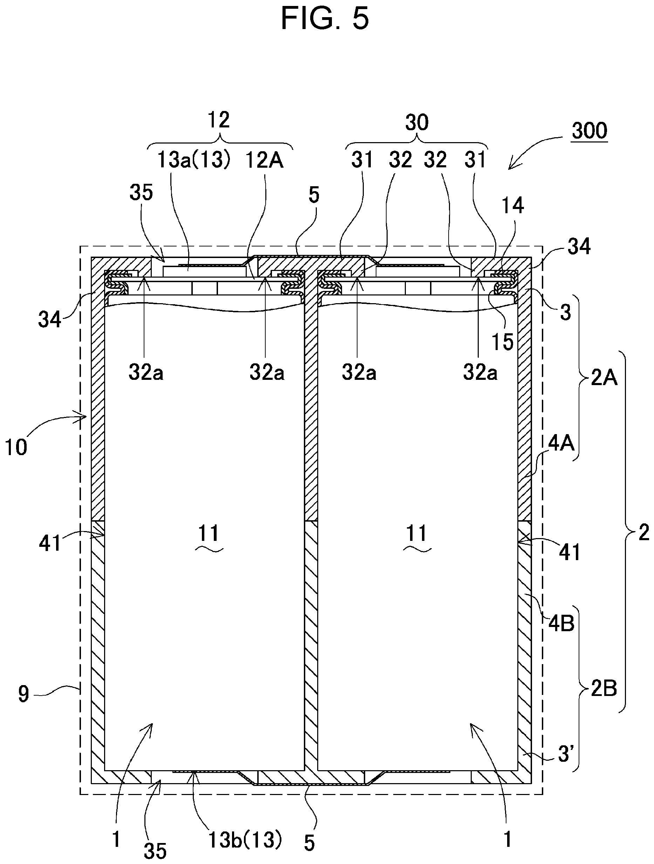

Battery holder 2 as described above uses insulating covers 3 and 3' and main body holder 4 as separate members, and is assembled so that insulating covers 3 and 3' are joined to main body holder 4 in which battery cells 1 are inserted. However, it is also possible that insulating covers 3 and 3' and split main body holders 4A and 4B may be molded into an integral structure, as in battery pack 300 shown in Fig. 5. This structure may be assembled by inserting half of battery cells 1 into cell-containing compartments 41 of one of split battery holder 2A, which forms battery holder 2, then inserting the other half of battery cells 1 into cell-containing compartments 41 of the other one of split battery holder 2B, and joining the pair of split battery holders 2A and 2B together. Insulating cover 3 that is molded in an integral structure with split battery holder 2A may be provided with protective ring member 30 in an integral structure, and may connect split battery holder 2A to battery cells 1 with an engaging structure to arrange protective ring member 30 at a fixed position on battery cells 1.

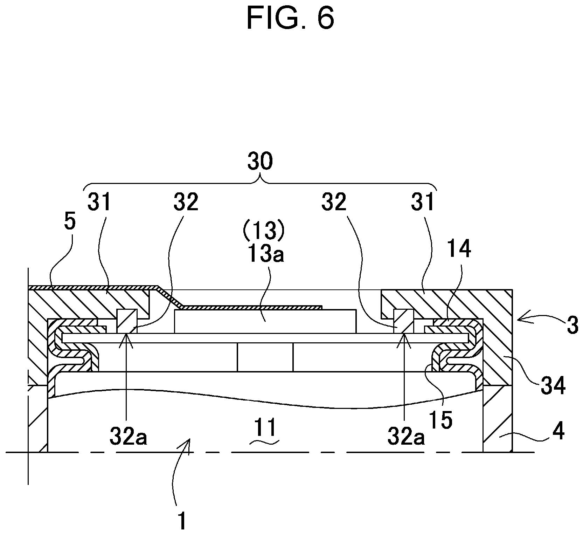

Furthermore, insulating cover 3 may also be such that end face plate part 31 is molded in an integral structure therewith while ribbed ring part 32 may be molded as a separate member. This ribbed ring part 32 is, as illustrated in Fig. 6, molded as a separate member also from battery holder 2. Ribbed ring part 32 that is a separate member may be molded of a heat resistant material having a higher heat resistance temperature than end face plate part 31. Ribbed ring part 32 that is a separate member may be molded of, for example, a plastic having a higher heat resistance temperature than end face plate part 31, or alternatively, may be produced of an electrically insulative inorganic material, such as metal, metallic compound, mica, or ceramic, that is rendered to have an electrically insulating structure by a surface insulation treatment or laminating an insulating material. As illustrated in Fig. 6, ribbed ring part 32 that is a separate member as described above may be joined to a fixed position on end face plate part 31 by an engaging structure during assembly. Alternatively, ribbed ring part 32 may be joined to end face plate part 31 by adhesive bonding, or may be joined to a fixed position on end face plate part 31 by bonding with a double-sided adhesive tape or the like.

In addition, when ribbed ring part 32 is composed of a different material from that of end face plate part 31, ribbed ring part 32 and end face plate part 31 may not necessarily be separate members from each other and ribbed ring part 32 may be formed in an integral structure with end face plate part 31. For example, ribbed ring part 32 may be molded of a plastic having a higher heat resistance temperature than end face plate part 31 by double molding to form an integral structure. It is also possible to achieve excellent heat resistance while ribbed ring part 32 is molded into an integral structure with end face plate part 31 by insert molding the previously-mentioned inorganic material in the resin molding for ribbed ring part 32. As described above, it is possible to perform assembling easily and simply while achieving excellent heat resistance by constructing ribbed ring part 32 from a heat resistant material having a high heat resistance temperature and forming an integral structure with end face plate part 31.

### Lead Plate 5

Lead plate 5 is set at a fixed position on insulating cover 3 and is connected to electrodes 13 of adjacent battery cells 1. In battery pack 100 of Fig. 1, adjacent battery cells 1 are connected in parallel, so respective opposite ends of lead plate 5 are connected to protruding electrodes 13a, which are electrodes 13 of adjacent battery cells 1. Lead plate 5 is connected to electrodes 13 of adjacent battery cells 1 by a welding technique, such as spot welding or laser welding. For lead plate 5, it is possible to use materials with good electrical and thermal conductivity, and it is possible to suitably use metal plates such as iron plate surface-plated with nickel or the like, nickel plate, copper plate, aluminum plate, and the like.

### INDUSTRIAL APPLICABILITY

The battery pack according to the present invention is suitably applied to a power supply for various applications, as a battery pack that inhibits the ejected substance from the opened relief valve of a battery cell from causing thermal damages to other battery cells and thereby enhances safety.

### REFERENCE MARKS IN THE DRAWINGS

- 100, 200, 300: battery pack
- 1: battery cell
- 2: battery holder
- 2A, 2B: split battery holder
- 3, 3': insulating cover
- 4, 4A, 4B, 4X: main unit holder
- 5: lead plate
- 9: outer covering case
- 10: battery assembly
- 11: outer covering can
- 12: sealing plate
- 12A: ring-shaped flat surface
- 13: electrode
- 13a: protruding electrode
- 13b: bottom face electrode
- 13c: flat surface electrode
- 14: crimped part
- 15: insulating gasket
- 16: ring-shaped recess
- 19: fastening screw
- 30: protective ring member
- 31: end face plate part
- 32: ribbed ring part
- 32a: tip end surface
- 33: engaging recess
- 34: circumferential wall part
- 35: connection window
- 91: battery cell
- 91A: electrode end face
- 92: battery holder
- 93: end face covering portion
- 94: gap closing wall
- 95: lead plate

## Claims

1. A battery pack comprising:
a plurality of battery cells, each including an outer covering can and a sealing plate and securing an outer peripheral edge of the sealing plate to an opening of the outer covering can by a crimped part via an insulating gasket;
an outer covering case containing the battery cells; and
a protective ring member for the insulating gasket of one of the battery cells, wherein:
the protective ring member comprises:
an end face plate part covering a surface of the crimped part; and
a ribbed ring part covering an inner peripheral end edge of the crimped part; and
the ribbed ring part is disposed between the end face plate part and the sealing plate, and includes a tip end surface close to a surface of the sealing plate.

2. The battery pack according to claim 1, wherein:
the sealing plate includes:
a protruding electrode at a center of the sealing plate; and
a ring-shaped flat surface, disposed outside the protruding electrode, on which the crimped part is stacked via the insulating gasket; and
a ring-shaped recess is disposed between the protruding electrode and the crimped part; and
the ribbed ring part protrudes toward the ring-shaped recess to bring the tip end surface into contact with the ring-shaped flat surface.

3. The battery pack according to claim 1 or 2, further comprising:
a battery holder arranging the battery cells at a fixed position, and wherein
the end face plate part is integrally molded with the battery holder.

4. The battery pack according to any one of claims 1 through 3, wherein the end face plate part and the ribbed ring part are molded into an integral structure.

5. The battery pack according to any one of claims 1 through 3, wherein the ribbed ring part is a member separate from the end face plate part.

6. The battery pack according to claim 5, wherein the end face plate part and the ribbed ring part are connected together in a fixed position by an engaging structure.

7. The battery pack according to claim 5 or 6, wherein the end face plate part and the ribbed ring part are joined together.

8. The battery pack according to any one of claims 4 through 7, wherein the ribbed ring part is made of a heat resistant material with a higher heat resistance temperature than the end face plate part.

9. The battery pack according to claim 8, wherein the ribbed ring part is made of a plastic with a higher heat resistance temperature than the end face plate part.

10. The battery pack according to claim 8, wherein the ribbed ring part comprises an inorganic material.
